# EUROPÄISCHE PATENTSCHRIFT

(11) **EP 2 333 496 B1**
(45) Veröffentlichungstag und Bekanntmachung des Hinweises auf die Patenterteilung: **19.09.2018**
(21) Anmeldenummer: 10015454.1
(22) Anmeldetag: 09.12.2010
(51) Int. Cl.: G01F 15/00, G01F 1/84

(54) **Coriolis-Massendurchflussmessgerät und Magnetanordnung für ein solches Messgerät**
Coriolis mass flow measuring device and magnet assembly for such a measuring device
Débitmètre massique du type Coriolis et assemblage pour un tel débitmètre

(30) Priorität: 11.12.2009 DE 102009057912
(43) Veröffentlichungstag der Anmeldung: 15.06.2011
(73) Patentinhaber: Krohne AG, 4019 Basel (CH)
(72) Erfinder: Hussain, Yousif, Dr., Weston Favell Northamton NN 3 3 DA (GB); Rolph, Christopher, Hartwell Northants NN7 2 HA (GB); Harrison, Nei, Duston Northamton NN5 6SR (GB)
(74) Vertreter: Gesthuysen Patent- und Rechtsanwälte

(56) Entgegenhaltungen:
- WO-A1-2007/043996
- DE-A1-102008 007 742
- US-A- 5 602 345

## Beschreibung

Die Erfindung betrifft ein Coriolis-Massendurchflussmessgerät mit einem zu Schwingungen anregbaren Messrohr, und einer zur Schwingungserzeugung und/oder zur Schwingungsaufnahme dienenden Magnetanordnung, wobei die Magnetanordnung wenigstens einen Permanentmagneten und einen den Permanentmagneten haltenden Magnethalter umfasst.

Massendurchflussmessgeräte, die nach dem Coriolis-Prinzip arbeiten, weisen wenigstens einen Schwingungserzeuger auf, mit dem das Messrohr zu Schwingungen angeregt wird. Die Schwingungen des Messrohrs werden üblicherweise mit zwei Schwingungsaufnehmern erfasst. Die Bestimmung des Massendurchflusses erfolgt dann über die Phasenverschiebung zwischen den von den beiden Schwingungsaufnehmern jeweils erfassten Schwingungen.

Der Schwingungserzeuger und die Schwingungsaufnehmer sind im Allgemeinen derart aufgebaut, dass sie einen Permanentmagneten sowie eine Magnetspule aufweisen, um auf elektrischem Wege Schwingungen auf das Messrohr zu übertragen bzw. Schwingungen des Messrohrs zu erfassen, weshalb sie vorliegend als Magnetanordnung bezeichnet werden. Um den Permanentmagneten am Schwingungserzeuger bzw. am Schwingungsaufnehmer zu befestigen, wird dieser beispielsweise in ein den Permanentmagneten umgebendes Schutzgehäuse eingeklebt, so dass er vor einer Beschädigung durch äußere Einflüsse, wie Stößen beim Transport oder bei der Installation, geschützt ist

Die DE 10 2008 007 742 A1 offenbart ein Coriolis-Massendurchflussmessgerät, dass einen Magnethalter mit einem Schutzgehäuse umfasst, wobei der Magnethalter aus Kunststoff gefertigt ist. Der Permanentmagnet ist in den Magnethalter eingebracht und wird von diesem gehalten. Das Schutzgehäuse umgibt den Magnethalter und schützt den Magneten zusätzlich vor mechanischer Beschädigung. Die aus dem Stand der Technik bekannten Schutzeinrichtungen weisen allerdings den Nachteil auf, dass durch die dauerhafte Schwingungsbelastung die Befestigung zwischen Kunststoff-Magnethalter und metallischem Schutzgehäuse mit vergleichsweise großem Aufwand hergestellt werden muss.

Ausgehend von dem vorgenannten Stand der Technik liegt der Erfindung die Aufgabe zugrunde, ein Coriolis-Massendurchflussmessgerät anzugeben, das eine Befestigung für den Permanentmagneten aufweist, die einer dauerhaften Schwingungsbelastung standhält und den Permanentmagneten zuverlässig schützt.

Coriolis-Massendurchflussmessgeräte mit einer Magnetanordnung mit Halter für einen Permanentmagneten sind zudem aus US 5 602 345 A und WO 2007/043996 A1 bekannt.

Ausgehend von den eingangs beschriebenen Coriolis-Massendurchflussmessgeräten ist die Aufgabe gelöst, indem der Magnethalter der Magnetanordnung aus einem nichtmagnetischen rostfreien Stahl besteht. Der Magnethalter aus rostfreiem Stahl ist unanfällig gegen eine Beschädigung durch dauerhafte Schwingungen, so dass der Magnethalter beispielsweise gegenüber einem Magnethalter aus einem Kunststoff eine gesteigerte Lebensdauer aufweist. Zudem weist das erfindungsgemäße Coriolis-Massendurchflussmessgerät den Vorteil auf, dass es durch die Konstruktion des Magnethalters aus einem nichtmagnetischen rostfreien Stahl auch für Hochtemperaturanwendungen verwendbar ist, ohne dass Bauteile des Messgeräts durch die hohen Temperaturen beschädigt werden. Der Magnethalter besteht aus einem nichtmagnetischen bzw. nichtmagnetisierbaren rostfreien Stahl, so dass der Magnethalter das Magnetfeld des permanenten Magneten nicht beeinflusst. Vorzugsweise umgibt der Magnethalter den Magnet vollständig und schützend, so dass dieser vor mechanischer Beschädigung, beispielsweise durch einen Stoß, geschützt ist.

Um den Permanentmagneten zusätzlich vor Beschädigungen zu schützen, weist die Magnetanordnung ein Schutzgehäuse auf, wobei der Magnethalter stoffschlüssig mit dem Schutzgehäuse verbunden ist, und das Schutzgehäuse aus einem rostfreien Stahl besteht. Der Magnethalter und das Schutzgehäuse sind dazu vorzugsweise koaxial angeordnet, wobei der Magnethalter mit dem Schutzgehäuse beispielsweise verlötet oder verschweißt ist. Als Schweißverfahren eignen sich u. a. das Widerstandsschweißen, insbesondere das Widerstandspunktschweißen, aber auch andere Schweißverfahren, z. B. das Laserschweißen. Als Lötverfahren eignen sich beispielsweise das Weichlöten, das Hartlöten oder das Hochtemperaturlöten. Das Schutzgehäuse und der Magnethalter werden dadurch zuverlässig stoffschlüssig verbunden, so dass die Verbindung unlösbar ist. Die Verbindung wird nicht durch Dauerschwingungen oder durch hohe Temperaturen beschädigt.

Das Material des Schutzgehäuses sollte insgesamt eine hohe magnetische Permeabilität aufweisen, so dass das Schutzgehäuse die magnetischen Feldlinien, die von dem Permanentmagneten ausgehen, führen kann, insbesondere um eine hohe Flussdichte in der Nähe der Spule sicherzustellen. Als Material eignet sich ein üblicher Stahl oder Baustahl mit einem geringen Kohlenstoffanteil. Um eine Korrosionsfestigkeit des Schutzgehäuses zu gewährleisten, ist auch vorgesehen, dass das Schutzgehäuse aus einem rostfreien Stahl besteht, wobei es sich dabei um einen magnetisierbaren rostfreien Stahl handeln sollte.

Damit der Magnethalter den Permanentmagneten nahezu vollständig umgeben kann, ist vorgesehen, dass der Magnethalter einen Aufnahmeraum für den Permanentmagneten bildet und der Permanentmagnet in den Aufnahmeraum des Magnethalters eingebracht ist. Der Permanentmagnet ist somit von den starren Wänden des Magnethalters umgeben, so dass die Gefahr einer mechanischen Beschädigung des Permanentmagneten reduziert ist. Der Aufnahmeraum umgibt den Permanentmagneten dabei vorzugsweise derart, dass kein oder nur ein geringer Spalt zwischen den Wänden des Aufnahmeraums und dem Permanentmagneten verbleibt.

Ganz bevorzugt kann dieser Spalt reduziert werden, indem der Magnethalter als Hohlzylinder ausgestaltet ist und den Aufnahmeraum für den Permanentmagneten definiert. Vorzugsweise ist auch der Permanentmagnet dafür zylindrisch ausgebildet, wobei der Außendurchmesser des Permanentmagneten im wesentlichen dem Innendurchmesser des Hohlzylinders entspricht, so dass der zylindrische Permanentmagnet in den als Hohlzylinder ausgebildeten Magnethalter eingebracht und innerhalb des Magnethalters befestigt werden kann. Der Magnethalter ist dabei vorzugsweise von einem zylindrischen Schutzgehäuse umgeben, wobei dass Schutzgehäuse und der Magnethalter koaxial angeordnet sind. Der innerhalb des Schutzgehäuses angeordnete Magnethalter ist vorzugsweise in seiner Längserstreckung etwas länger als die Längserstreckung des Schutzgehäuses - gemeint ist damit jeweils die Länge des Zylinders -, so dass der Magnethalter aus dem Schutzgehäuse hinausragt, vorzugsweise etwa einen bis zwei Millimeter.

Damit der Permanentmagnet innerhalb des Magnethalters zuverlässig befestigt ist, ist gemäß einer vorteilhaften Ausgestaltung vorgesehen, dass der Permanentmagnet in dem Magnethalter gehalten ist, indem ein offenes Ende des Magnethalters plastisch verformt ist. Ein offenes Ende des Magnethalters - vorzugsweise das Ende, durch das der Magnet in den Magnethalter hineingeführt worden ist - wird dabei mit einem Werkzeug plastisch verformt bzw. zusammengecrimpt, so dass die Öffnung des Magnethalters derart verringert wird, dass der Magnet nicht mehr hindurchtreten kann. Vorzugsweise ist dazu die Längserstreckung des Magnethalters etwas länger als der Permanentmagnet selber, so dass der überstehende Teil des Magnethalters zusammengedrückt wird. Dabei ist darauf zu achten, dass der Magnet durch das plastische Verformen des Magnethalters nicht beschädigt wird, und dass der Magnethalter im Wesentlichen seine äußere Form beibehält und nur sehr lokal plastisch verformt wird.

Gemäß einer bevorzugten Ausgestaltung des Coriolis-Massendurchflussmessgeräts ist vorgesehen, dass der Magnethalter eine Basisplatte aufweist, wobei der Magnethalter mit der Basisplatte an dem Schutzgehäuse befestigt ist. Die Basisplatte ist vorzugsweise kreisrund, wobei an der Basisplatte der den Aufnahmeraum des Magnethalters bildende Teil des Magnethalters - beispielsweise ein zylindrisches Rohr - angebracht ist. Eine kreisrunde Basisplatte eignet sich insbesondere für ein Schutzgehäuse mit einer kreisrunden Bodenfläche. Die Basisplatte dient zur Befestigung des Magnethalters an dem Schutzgehäuse und ist vorzugsweise aus dem gleichen Material wie der Magnethalter. Zur Befestigung des Magnethalters an dem Schutzgehäuse wird der Magnethalter beispielsweise mit seiner Basisplatte mit dem Schutzgehäuse verschweißt oder verlötet.

Um den Magnethalter und das Schutzgehäuse zuverlässig zueinander auszurichten, ist gemäß einer vorteilhaften Ausgestaltung vorgesehen, dass das Schutzgehäuse im Kontaktbereich mit dem Magnethalter ein Positioniermittel aufweist, so dass der Magnethalter an dem Positioniermittel in dem Schutzgehäuse ausrichtbar ist. Das Positioniermittel ist vorzugsweise als Vorsprung oder als Rücksprung an dem Schutzgehäuse ausgebildet, wobei der Magnethalter ein entsprechendes Gegenstück aufweist, so dass eine einfache Ausrichtung des Magnethalters relativ zum Schutzgehäuse ermöglicht ist. Vorzugsweise sind der Magnethalter und auch das Schutzgehäuse zylindrisch, so dass sie mit dem Positioniermittel koaxial ausgerichtet werden können.

Gemäß einer bevorzugten Weiterbildung ist vorgesehen, dass das Positioniermittel als Vorsprung an dem Schutzgehäuse ausgebildet ist, insbesondere der Vorsprung kreisrund ist und einen Durchmesser aufweist, der dem Innendurchmesser des Aufnahmeraums des Magnethalters entspricht. Der Magnethalter ist so auf einfache Weise auf den Vorsprung aufsetzbar. Bei Ausgestaltung mit einer Basisplatte weist die Basisplatte im Bereich des Vorsprungs eine Ausnehmung auf, so dass der Vorsprung in die Basisplatte hinein oder durch sie hindurch greifen kann. Der Magnethalter wird durch den Vorsprung nicht nur relativ zum Schutzgehäuse positioniert, sondern zusätzlich auch formschlüssig von dem Vorsprung gehalten. Vorzugsweise ist die Oberfläche des Vorsprungs mit einer besonderen Oberflächengüte gefertigt, so dass der Permanentmagnet auf eine besonders glatte Oberfläche aufsetzbar ist.

Um das Schutzgehäuse mit dem daran befestigten Magnethalter auf einfache Weise an dem Coriolis-Massendurchflussmessgerät zu befestigen, ist gemäß einer bevorzugten Ausgestaltung vorgesehen, dass das Schutzgehäuse ein befestigungsmittel zur Befestigung an einer Halteeinrichtung aufweist. Das Schutzgehäuse weist dazu beispielsweise an seiner Rückseite einen zylindrischen Stab auf, mit dem eine Befestigung an einem Tragrahmen ermöglicht ist. Der zylindrische Stab ist vorzugsweise einstückig mit dem Schutzgehäuse ausgebildet und weist beispielsweise ein Gewinde auf oder ist vollständig glatt.

Eine Ausgestaltung, die sich insbesondere dann eignet, wenn der Magnethalter mit dem Schutzgehäuse verlötet ist, zeichnet sich dadurch aus, dass das Schutzgehäuse im Kontaktbereich mit dem Magnethalter wenigstens eine Bohrung aufweist. Durch diese Bohrung kann beispielsweise ein Lötzusatzstoff oder ein Flussmittel von der Unterseite an den Magnethalter herangeführt werden, so dass eine zuverlässige Verbindung zwischen Magnethalter und Schutzgehäuse sichergestellt ist. Durch die Bohrung im Kontaktbereich ist auch die Basisplatte - soweit sie vorhanden ist - von der Rückseite des Schutzgehäuses zugänglich.

Neben oder zusätzlich zu der Befestigung des Permanentmagneten durch plastische Verformung eines Teils des Magnethalters ist gemäß einer vorteilhaften Weiterbildung vorgesehen, dass der Permanentmagnet wenigstens mittels eines Klebemittels an dem Magnethalter befestigt ist. Dazu wird beim Einbringen des Permanentmagneten in den Aufnahmeraum des Magnethalters zusätzlich ein Klebemittel hinzugegeben, so dass der Magnet spielfrei innerhalb des Aufnahmeraums des Magnethalters durch den Klebstoff gehalten wird. Der Klebstoff füllt dabei den geringen Spalt zwischen Magnethalter und Permanentmagnet aus, wodurch eine Beschädigung des Permanentmagneten nahezu ausgeschlossen ist.

Gemäß einer letzten Ausgestaltung des Coriolis-Massendurchflussmessgeräts ist vorgesehen, dass die Magnetanordnung wenigstens zwei Permanentmagnete und wenigstens einen Metallkern umfasst, wobei der Metallkern in dem Magnethalter zwischen den Permanentmagneten angeordnet ist, insbesondere die Permanentmagnete dabei jeweils mit einem gleichen Pol zueinander ausgerichtet sind. Die beispielsweise zylindrischen Permanentmagnete werden dazu hintereinander in den zylindrischen Magnethalter eingebracht, wobei zwischen die Permanentmagnete ein zylindrischer Metallkern eingebracht wird. Der Metallkern weist vorzugsweise eine hohe magnetische Permeabilität auf, die beispielsweise mit der Permeabilität des Schutzgehäuses vergleichbar ist. Die Permanentmagnete, die vor bzw. hinter dem Metallkern angeordnet sind, sind vorzugsweise so ausgerichtet, dass sie jeweils mit einem gleichen Pol aufeinandergerichtet sind, wobei damit gemeint ist, dass beispielsweise jeweils die beiden Südpole der Magneten an den Metallkern angrenzen, wodurch sich ein vorteilhafter Verlauf des Magnetfelds ergibt. Alternativ können die Magneten aber auch so ausgerichtet werden, dass die beiden Nordpole von jeweils einer Seite an den Metallkern angrenzen.

Im Einzelnen gibt es eine Vielzahl von Möglichkeiten, das erfindungsgemäße Coriolis-Massendurchflussmessgerät auszugestalten und weiterzubilden. Dazu wird verwiesen sowohl auf die nachgeordneten Patentansprüche als auch auf die nachfolgende Beschreibung von Ausführungsbeispielen in Verbindung mit der Zeichnung. In der Zeichnung zeigen:
- Fig. 1: ein erfindungsgemäßes Ausführungsbeispiel eines Magnethalters mit Schutzgehäuse für ein Coriolis-Massendurchflussmessgerät in geschnittener Seitenansicht,
- Fig. 2: das Ausführungsbeispiel des Magnethalters mit Schutzgehäuse gemäß Fig. 1 in einer perspektivischen Rückansicht,
- Fig. 3: das Ausführungsbeispiel des Magnethalters mit Schutzgehäuse gemäß den Fig. 1 und 2 mit vergrößerter Darstellung des plastisch verformten Magnethalters und
- Fig. 4: ein Ausführungsbeispiel eines Magnethalters in Seitenansicht.

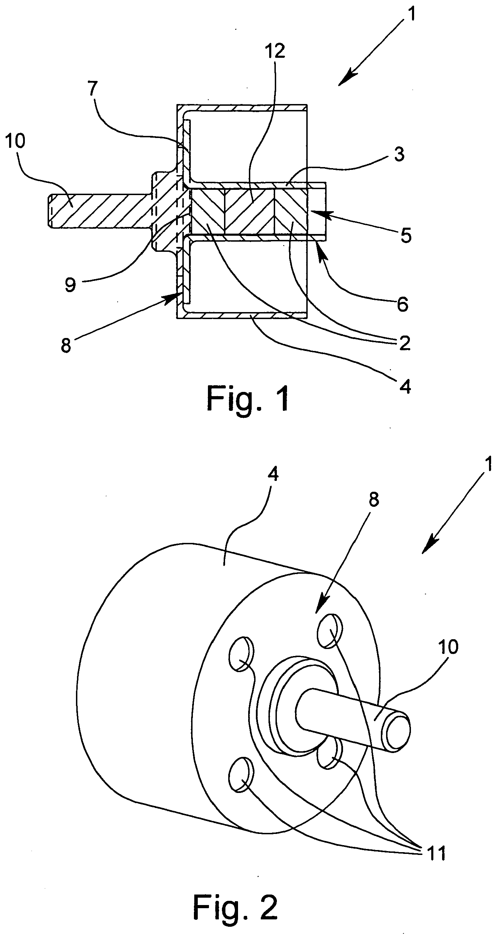

Fig. 1 zeigt eine Magnetanordnung 1 für ein Coriolis-Massendurchflussmessgerät mit einem zu Schwingungen anregbaren Messrohr, wobei die Magnetanordnung 1 zur Schwingungserzeugung und/oder zur Schwingungsaufnahme dient. Die Magnetanordnung 1 im Ausführungsbeispiel gemäß den Fig. 1 bis 3 umfasst zwei Permanentmagnete 2, die in einem Magnethalter 3 befestigt sind, der aus einem nichtmagnetischen rostfreien Stahl besteht. Der Magnethalter 3 ist umgeben von einem Schutzgehäuse 4, wobei das Schutzgehäuse 4 mit dem Magnethalter 3 stoffschlüssig verbunden. Bei diesem Ausführungsbeispiel ist der Magnethalter 3 mit dem Schutzgehäuse 4 verlötet.

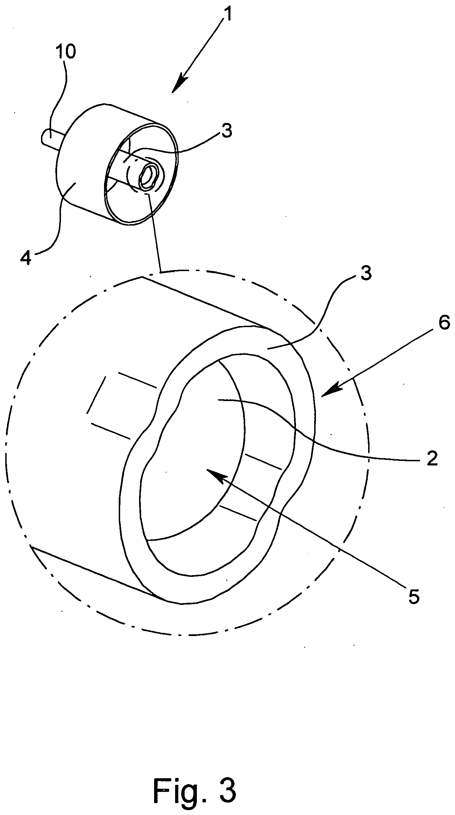

Der Magnethalter 3 ist als Hohlzylinder ausgestaltet und bildet dadurch einen zylindrischen Aufnahmeraum 5, in den die zylindrischen Permanentmagnete 2 eingebracht sind. Die Permanentmagnete 2 sind durch das offene Ende 6 des Magnethalters 3 in den Aufnahmeraum 5 eingebracht, wobei das offene Ende 6 - wie insbesondere in Fig. 3 dargestellt - plastisch verformt ist. Der Magnethalter 3 weist gemäß Fig. 1 eine Basisplatte 7 auf, wobei der Magnethalter 3 mit der Basisplatte 7 in einem Kontaktbereich 8 - hier die Bodenplatte des Schutzgehäuses 4 - stoffschlüssig mit dem Schutzgehäuse 4 verbunden ist. Zur Positionierung des Magnethalters 3 innerhalb des Schutzgehäuses 4, weist das Schutzgehäuse 4 einen als Vorsprung ausgestaltetes Positioniermittel 9 auf, wobei der Magnethalter 3 innerhalb des Schutzgehäuses 4 mit dem Positioniermittel 9 positionierbar und ausrichtbar ist. Der Durchmesser des hier kreisrunden Positioniermittels 9 entspricht im Wesentlich dem Innendurchmesser des Aufnahmeraums 5, wobei die Basisplatte 7 eine Ausnehmung aufweist, so dass das Positioniermittel 9 in die Basisplatte 7 eingreifen kann.

Fig. 2 zeigt eine perspektivische Rückansicht der Magnetanordnung 1, wobei im rückwärtigen Bereich des Schutzgehäuses 4 ein Befestigungsmittel 10 zur Befestigung der Magnetanordnung 1 an einem Coriolis-Massendurchflussmessgerät vorgesehen ist. Das Befestigungsmittel 10 ist auch zylindrisch und einstückig mit dem Schutzgehäuse ausgestaltet. Zusätzlich zu dem Befestigungsmittel 10 ist im rückwärtigen Bereich des Schutzgehäuses 4 eine Mehrzahl von Bohrungen 11 vorgesehen, die im Kontaktbereich 8 des Schutzgehäuses 4 angeordnet sind. Durch die Bohrungen 11 im Schutzgehäuse 4 ist die Basisplatte 7 des Magnethalters 3 von ihrer Unterseite zugänglich, so dass zur Befestigung des Magnethalters 3 an dem Schutzgehäuse 4 ein Flussmittel oder ein Lötzusatzmittel durch die Bohrungen 11 an die Unterseite der Basisplatte 7 des Magnethalters 3 herangebracht werden kann.

Neben den Permanentmagneten 2 ist gemäß Fig. 1 innerhalb des Aufnahmeraums 5 des Magnethalters 3 zusätzlich ein Metallkern 12 zwischen die beiden Permanentmagneten 2 eingebracht, der die Permanentmagneten 2 voneinander trennt und einer speziellen Ausrichtung des Magnetfelds der Permanentmagneten 2 dient. Die Permanentmagnete 2 sind dabei so angeordnet, dass sie jeweils mit ihren Südpolen an dem Metallkern 12 anliegen. Der in Fig. 1 auf der linken Seite dargestellte Permanentmagnet 2 liegt an dem Vorsprung 9 des Schutzgehäuses 4 an.

Fig. 3 zeigt eine Magnetanordnung 1, insbesondere eine Vergrößerung des plastisch verformten offenen Endes 6 des Magnethalters 3, wobei das offene Ende 6 des Magnethalters 3 an zwei gegenüberliegenden Stellen plastisch verformt bzw. zusammengecrimpt worden ist, so dass die Öffnung zum Aufnahmeraum 5 verkleinert worden ist und die Magneten 2 nicht mehr aus dem Aufnahmeraum 5 hinausbewegt werden können.

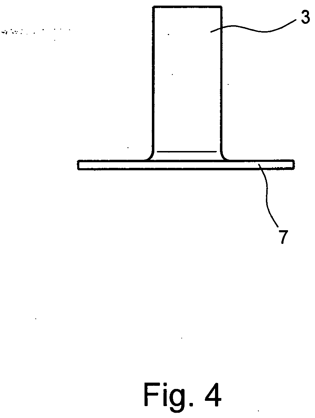

Fig. 4 zeigt einen Magnethalter 3 aus einem nichtmagnetischen rostfreien Stahl, wobei der Magnethalter 3 einstückig mit einer Basisplatte 7 ausgestaltet ist. Der Magnethalter 3 ist mit der Basisplatte 7 an einem Schutzgehäuse 4 befestigbar. Die Höhe des zylindrischen Teils des Magnethalters 3 ist geringfügig größer als die Höhe des Schutzgehäuses 4 - siehe Fig. 1 -, so dass der Magnethalter 3 mit seinem offenen Ende 6 etwas über die Außenhöhe des Schutzgehäuses 4 hinausragt. Dieser hinausragende Teil am offenen Ende 6 des Magnethalters 3 dient der plastischen Verformung zur Fixierung der Permanentmagnete 2 innerhalb des Magnethalters 3. Die Permanentmagnete 2 bilden zusammen mit dem Metallkern 12 einen Zylinder, der bezüglich seiner Höhe bündig mit den Außenkanten des Schutzgehäuse 4 abschließt.

## Patentansprüche

1. Coriolis-Massendurchflussmessgerät mit einem zu Schwingungen anregbaren Messrohr und einer zur Schwingungserzeugung und/oder zur Schwingungsaufnahme dienenden Magnetanordnung (1), wobei die Magnetanordnung (1) wenigstens einen Permanentmagneten (2) und einen den Permanentmagneten (2) haltenden Magnethalter (3) umfasst,
**dadurch gekennzeichnet,**
**dass** der Magnethalter (3) aus einem nichtmagnetischen rostfreien Stahl besteht, die Magnetanordnung (1) ein Schutzgehäuse (4) aufweist, wobei der Magnethalter (3) stoffschlüssig mit dem Schutzgehäuse (4) verbunden ist und das Schutzgehäuse (4) aus einem rostfreien Stahl mit einer hohen magnetischen Permeabilität besteht, wobei der Magnethalter (3) einen Aufnahmeraum (5) für den Permanentmagneten (2) bildet und der Permanentmagnet (2) in den Aufnahmeraum (5) des Magnethalters (3) eingebracht ist.

2. Coriolis-Massendurchflussmessgerät nach Anspruch 1, **dadurch gekennzeichnet, dass** der Magnethalter (3) als Hohlzylinder ausgestaltet ist und den Aufnahmeraum (5) für den Permanentmagneten (2) definiert.

3. Coriolis-Massendurchflussmessgerät nach Anspruch 1 oder 2, **dadurch gekennzeichnet, dass** der Permanentmagnet (2) in dem Magnethalter (3) gehalten ist, indem ein offenes Ende (6) des Magnethalters (3) plastisch verformt ist.

4. Coriolis-Massendurchflussmessgerät nach einem der Ansprüche 1 bis 3, **dadurch gekennzeichnet, dass** der Magnethalter (3) eine Basisplatte (7) aufweist, wobei der Magnethalter (3) mit der Basisplatte (7) an dem Schutzgehäuse (4) befestigt ist.

5. Coriolis-Massendurchflussmessgerät nach einem der Ansprüche 1 bis 4, **dadurch gekennzeichnet, dass** das Schutzgehäuse (4) im Kontaktbereich (8) mit dem Magnethalter (3) ein Positioniermittel (9) aufweist, so dass der Magnethalter (3) an dem Positioniermittel (9) in dem Schutzgehäuse (4) ausrichtbar ist.

6. Coriolis-Massendurchflussmessgerät nach den Ansprüchen 4 und 5, **dadurch gekennzeichnet, dass** das Positioniermittel (9) als Vorsprung an dem Schutzgehäuse (4) ausgebildet ist, insbesondere der Vorsprung kreisrund ist und einen Durchmesser aufweist, der dem Innendurchmesser des Rohrstücks des Magnethalters (3) entspricht.

7. Coriolis-Massendurchflussmessgerät einem der Ansprüche 1 bis 6, **dadurch gekennzeichnet, dass** das Schutzgehäuse (4) ein Befestigungsmittel (10) zur Befestigung an einer Haltereinrichtung aufweist.

8. Coriolis-Massendurchflussmessgerät nach einem der Ansprüche 1 bis 7, **dadurch gekennzeichnet, dass** das Schutzgehäuse (4) im Kontaktbereich (8) mit dem Magnethalter (3) wenigstens eine Bohrung (11) aufweist.

9. Coriolis-Massendurchflussmessgerät nach einem der Ansprüche 1 bis 8, **dadurch gekennzeichnet, dass** der Permanentmagnet (2) wenigstens mittels eines Klebemittels an dem Magnethalter (3) befestigt ist.

10. Coriolis-Massendurchflussmessgerät nach einem der Ansprüche 1 bis 9, **dadurch gekennzeichnet, dass** die Magnetanordnung (1) wenigstens zwei Permanentmagnete (2) und wenigstens einen Metallkern (12) umfasst, wobei der Metallkern (12) in dem Magnethalter (3) zwischen den Permanentmagneten (2) angeordnet ist, insbesondere die Permanentmagnete (2) dabei jeweils mit einem gleichen Pol aufeinander ausgerichtet sind.

11. Magnetanordnung für ein Coriolis-Massendurchflussmessgerät mit wenigstens einem Permanentmagneten (2) und einem den Permanentmagneten (2) haltenden Magnethalter (3),
**dadurch gekennzeichnet,**
**dass** der Magnethalter (3) aus einem nichtmagnetischen rostfreien Stahl besteht, die Magnetanordnung (1) ein Schutzgehäuse (4) aufweist, wobei der Magnethalter (3) stoffschlüssig mit dem Schutzgehäuse (4) verbunden ist und das Schutzgehäuse (4) aus einem rostfreien Stahl mit einer hohen magnetischen Permeabilität besteht, wobei der Magnethalter (3) einen Aufnahmeraum (5) für den Permanentmagneten (2) bildet und der Permanentmagnet (2) in den Aufnahmeraum (5) des Magnethalters (3) eingebracht ist.

12. Magnetanordnung nach Anspruch 11, **dadurch gekennzeichnet, dass** der Magnethalter (3) als Hohlzylinder ausgestaltet ist und den Aufnahmeraum (5) für den Permanentmagneten (2) definiert,

13. Magnetanordnung nach Anspruch 11 oder 12, **dadurch gekennzeichnet, dass** der Permanentmagnet (2) in dem Magnethalter (3) gehalten ist, indem ein offenes Ende (6) des Magnethalters (3) plastisch verformt ist.

14. Magnetanordnung nach einem der Ansprüche 11 bis 13, **dadurch gekennzeichnet, dass** das Schutzgehäuse (4) im Kontaktbereich (8) mit dem Magnethalter (3) ein Positioniermittel (9) aufweist, so dass der Magnethalter (3) an dem Positioniermittel (9) in dem Schutzgehäuse (4) ausrichtbar ist.

15. Magnetanordnung nach Anspruch 14, **dadurch gekennzeichnet, dass** das Positioniermittel (9) als Vorsprung an dem Schutzgehäuse (4) ausgebildet ist, insbesondere der Vorsprung kreisrund ist und einen Durchmesser aufweist, der dem Innendurchmesser des Rohrstücks des Magnethalters (3) entspricht.

## Claims

1. Coriolis mass flowmeter having a measuring tube which can be excited to oscillations and a magnet arrangement (1) which is used to generate oscillations and/or to absorb oscillations, wherein the magnet arrangement (1) comprisrd at least one permanent magnet (2) and a magnet holder (3) holding the permanent magnet (2),
**characterized in**
**that** the magnetic holder (3) consists of a non-magnetic stainless steel, the magnetic arrangement (1) has a protective housing (4), wherein the magnetic holder (3) is connected in a material-locking manner to the protective housing (4) and the protective housing (4) consisting of a stainless steel with a high magnetic permeability, wherein the magnetic holder (3) forms a receiving space (5) for the permanent magnet (2) and the permanent magnet (2) is introduced into the receiving space (5) of the magnetic holder (3).

2. Coriolis mass flowmeter according to claim 1, **characterized in that** the magnetic holder (3) is designed as a hollow cylinder and defines the receiving space (5) for the permanent magnet (2).

3. Coriolis mass flowmeter according to claim 1 or 2, **characterized in that** the permanent magnet (2) is held in the magnetic holder (3) by plastically deforming an open end (6) of the magnetic holder (3).

4. Coriolis mass flowmeter according to any one of claims 1 to 3, **characterized in that** the magnetic holder (3) has a base plate (7), wherein the magnetic holder (3) is fastened to the protective housing (4) with the base plate (7).

5. Coriolis mass flowmeter according to any one of claims 1 to 4, **characterized in that** the protective housing (4) has a positioning means (9) in the contact region (8) with the magnetic holder (3), so that the magnetic holder (3) can be aligned with the positioning means (9) in the protective housing (4).

6. Coriolis mass flowmeter according to claims 4 and 5, **characterized in that** the positioning means (9) is formed as a projection on the protective housing (4), in particular the projection is circular and has a diameter which corresponds to the inner diameter of the pipe section of the magnetic holder (3).

7. Coriolis mass flowmeter according to any one of claims 1 to 6, **characterized in that** the protective housing (4) has fastening means (10) for fastening to a holding device.

8. Coriolis mass flowmeter according to any one of claims 1 to 7, **characterized in that** the protective housing (4) has at least one bore (11) in the contact region (8) with the magnetic holder (3).

9. Coriolis mass flowmeter according to any one of claims 1 to 8, **characterized in that** the permanent magnet (2) is attached to the magnetic holder (3) at least by means of an adhesive.

10. Coriolis mass flowmeter according to any one of claims 1 to 9, **characterized in that** the magnet arrangement (1) comprises at least two permanent magnets (2) and at least one metal core (12), wherein the metal core (12) is arranged in the magnet holder (3) between the permanent magnets (2), in particular the permanent magnets (2) are each aligned in respect to one another with an identical pole.

11. Magnet arrangement for a Coriolis mass flowmeter with at least one permanent magnet (2) and a magnet holder (3) holding the permanent magnet (2),
**characterized in**
**that** the magnetic holder (3) consists of a non-magnetic stainless steel, the magnetic arrangement (1) has a protective housing (4), wherein the magnetic holder (3) is connected in a material-locking manner to the protective housing (4) and the protective housing (4) consists of a stainless steel with a high magnetic permeability, wherein the magnetic holder (3) forms a receiving space (5) for the permanent magnet (2) and the permanent magnet (2) is introduced into the receiving space (5) of the magnetic holder (3).

12. Magnet arrangement according to claim 11, **characterized in that** the magnet holder (3) is designed as a hollow cylinder and defines the receiving space (5) for the permanent magnet (2).

13. Magnet arrangement according to claim 11 or 12, **characterized in that** the permanent magnet (2) is held in the magnet holder (3) by plastically deforming an open end (6) of the magnet holder (3).

14. Magnet arrangement according to any one of claims 11 to 13, **characterized in that** the protective housing (4) has a positioning means (9) in the contact region (8) with the magnet holder (3), so that the magnet holder (3) can be aligned with the positioning means (9) in the protective housing (4).

15. Magnet arrangement according to claim 14, **characterized in that** the positioning means (9) is formed as a projection on the protective housing (4), in particular the projection is circular and has a diameter which corresponds to the inner diameter of the pipe section of the magnet holder (3).

## Revendications

1. Débitmètre massique du type Coriolis avec un tube de mesure pouvant être excité en vibrations et un agencement d'aimant (1) servant pour la production de vibrations et/ou pour la réception de vibrations, dans lequel l'agencement d'aimant (1) comprend au moins un aimant permanent (2) et un porte-aimant (3) maintenant l'aimant permanent (2),
**caractérisé en ce que** le porte-aimant (3) est composé d'un acier inoxydable non magnétique, l'agencement d'aimant (1) présente un boîtier de protection (4), dans lequel le porte-aimant (3) est assemblé par continuité de matière au boîtier de protection (4) et le boîtier de protection (4) est composé d'un acier inoxydable ayant une perméabilité magnétique élevée, dans lequel le porte-aimant (3) forme une chambre de réception (5) pour l'aimant permanent (2) et l'aimant permanent (2) est introduit dans la chambre de réception (5) du porte-aimant (3).

2. Débitmètre massique du type Coriolis selon la revendication 1, **caractérisé en ce que** le porte-aimant (3) est formé par un cylindre creux et définit la chambre de réception (5) pour l'aimant permanent (2).

3. Débitmètre massique du type Coriolis selon la revendication 1 ou 2, **caractérisé en ce que** l'aimant permanent (2) est maintenu dans le porte-aimant (3), par le fait qu'une extrémité ouverte (6) du porte-aimant (3) est déformée plastiquement.

4. Débitmètre massique du type Coriolis selon l'une quelconque des revendications 1 à 3, **caractérisé en ce que** le porte-aimant (3) présente une plaque de base (7), dans lequel le porte-aimant (3) est fixé avec la plaque de base (7) au boîtier de protection (4).

5. Débitmètre massique du type Coriolis selon l'une quelconque des revendications 1 à 4, **caractérisé en ce que** le boîtier de protection (4) présente dans la zone de contact (8) avec le porte-aimant (3) un moyen de positionnement (9), de telle manière que le porte-aimant (3) puisse être orienté vers le moyen de positionnement (9) dans le boîtier de protection (4).

6. Débitmètre massique du type Coriolis selon les revendications 4 et 5, **caractérisé en ce que** le moyen de positionnement (9) est réalisé sous la forme d'une saillie sur le boîtier de protection (4), en particulier la saillie est ronde et présente un diamètre, qui correspond au diamètre intérieur de la pièce tubulaire du porte-aimant (3).

7. Débitmètre massique du type Coriolis selon l'une quelconque des revendications 1 à 6, **caractérisé en ce que** le boîtier de protection (4) présente un moyen de fixation (10) pour la fixation à un dispositif de support.

8. Débitmètre massique du type Coriolis selon l'une quelconque des revendications 1 à 7, **caractérisé en ce que** le boîtier de protection (4) présente au moins un trou (11) dans la région de contact (8) avec le porte-aimant (3).

9. Débitmètre massique du type Coriolis selon l'une quelconque des revendications 1 à 8, **caractérisé en ce que** l'aimant permanent (2) est fixé au porte-aimant (3) au moins au moyen d'un agent adhésif.

10. Débitmètre massique du type Coriolis selon l'une quelconque des revendications 1 à 9, **caractérisé en ce que** l'agencement d'aimant (1) comprend au moins deux aimants permanents (2) et au moins un noyau métallique (12), dans lequel le noyau métallique (12) est disposé dans le porte-aimant (3) entre les aimants permanents (2), en particulier les aimants permanents (2) sont en l'occurrence orientés l'un vers l'autre respectivement avec le même pôle.

11. Agencement d'aimant pour un débitmètre massique du type Coriolis avec au moins un aimant permanent (2) et un porte-aimant (3) maintenant l'aimant permanent (2), **caractérisé en ce que** le porte-aimant (3) est composé d'un acier inoxydable non magnétique, l'agencement d'aimant (1) présente un boîtier de protection (4), dans lequel le porte-aimant (3) est assemblé par continuité de matière au boîtier de protection (4) et le boîtier de protection (4) est composé d'un acier inoxydable ayant une perméabilité magnétique élevée, dans lequel le porte-aimant (3) forme une chambre de réception (5) pour l'aimant permanent (2) et l'aimant permanent (2) est introduit dans la chambre de réception (5) du porte-aimant (3).

12. Agencement d'aimant selon la revendication 11, **caractérisé en ce que** le porte-aimant (3) est formé par un cylindre creux et définit la chambre de réception (5) pour l'aimant permanent (2).

13. Agencement d'aimant selon la revendication 11 ou 12, **caractérisé en ce que** l'aimant permanent (2) est maintenu dans le porte-aimant (3), par le fait qu'une extrémité ouverte (6) du porte-aimant (3) est déformée plastiquement.

14. Agencement d'aimant selon l'une quelconque des revendications 11 à 13, **caractérisé en ce que** le boîtier de protection (4) présente dans la zone de contact (8) avec le porte-aimant (3) un moyen de positionnement (9), de telle manière que le porte-aimant (3) puisse être orienté vers le moyen de positionnement (9) dans le boîtier de protection (4).

15. Agencement d'aimant selon la revendication 14, **caractérisé en ce que** le moyen de positionnement (9) est réalisé sous la forme d'une saillie sur le boîtier de protection (4), en particulier la saillie est ronde et présente un diamètre, qui correspond au diamètre intérieur de la pièce tubulaire du porte-aimant (3).
